# DEMANDE DE BREVET EUROPEEN

(11) **EP 1 376 910 A2**
(43) Date de publication de la demande: **02.01.2004**
(21) Numéro de dépôt: 03291456.6
(22) Date de dépôt: 17.06.2003
(51) Int. Cl.: H04B 10/213

(54) **Réseau optique en anneau a fibres de lecture et d'écritures découplées**

(30) Priorité: 20.06.2002 FR 0207628
(71) Demandeur: ALCATEL, 75008 Paris (FR)
(72) Inventeur: Dotaro, Emmanuel, 91370 Verrieres Le Buisson (FR); La Sauze, Nicolas, 91440 Bures-sur-Yvette (FR)
(74) Mandataire: Sciaux, Edmond

(57) **Abrégé**

Un réseau optique en anneau comporte des première (2) et seconde (3) fibres optiques dites « actives », raccordées par l'une au moins de leurs deux extrémités à un noeud d'accès, couplées optiquement à des stations (4) et dédiées respectivement au transfert de données vers lesdites stations et à la transmission de données par chaque station. Chaque station (4) comporte, par ailleurs, des moyens de contrôle (10) capables de déterminer si la station est autorisée à transmettre des données sur la seconde fibre active (3), et le noeud d'accès comporte des moyens de transfert agencés pour transférer vers la première fibre active (2) les données acheminées par la seconde fibre active (3) et destinées à l'une au moins des stations.

## Description

L'invention concerne le domaine de la transmission de données dans les réseaux optiques en anneau.

La transmission de données par fibre optique présente un certain nombre d'intérêts comparé à la transmission traditionnelle par câble électrique, notamment pour ce qui concerne le coût du média de transport, le débit, l'atténuation et les perturbations électromagnétiques.

Cependant, dans les transmissions optiques de type « point à point », les signaux optiques qui codent les données transportées doivent être convertis en signaux électriques à chaque fois qu'ils atteignent un noeud du réseau, afin d'être utilisés localement ou relayés vers le noeud suivant, après une nouvelle conversion en signaux optiques. Par conséquent, chaque noeud de ce type de réseau optique doit être équipé d'un convertisseur de type O/E/O (« Optique / Electrique / Optique »). C'est notamment le cas des réseaux en anneau de type SONET (« Synchronous Optical NETwork ») ou SDH (« Synchronous Digital Hierarchy »). La complexité de fabrication de ces convertisseurs O/E/O et leur déploiement difficile rendent onéreux ces réseaux optiques en anneau.

Pour tenter de remédier à cet inconvénient, il a été proposé d'optimiser l'utilisation des fibres optiques par un multiplexage en longueurs d'onde. Cette technique, connue sous l'acronyme anglais (D)WDM (pour «(Dense) Wavelength Division Multiplexing »), permet de faire passer plusieurs longueurs d'onde différentes dans une même fibre, multipliant ainsi sa bande passante, ou en d'autres termes, le nombre de canaux indépendants. Un tel réseau WDM est décrit dans l'**article WAGNER S S** ET AL: "Multiwavelength ring networks for switch consolidation and interconnection" DISCOVERING A NEW WORLD OF COMMUNICATIONS, CHICAGO, JUNE 14 - 18, 1992. BOUND TOGETHER WITH B0190700, VOL. 3, PROCEEDINGS OF THE INTERNATIONAL, CONFERENCE ON COMMUNICATIONS, NEW YORK, IEEE, US, vol. 4, 14 juin 1992 (1992-06-14), pages 1173-1179, XPO10062090 ISBN: 0-7803-0599-X. Ce réseau connu ne nécessite pas de multiplexeurs électroniques à insertion-extraction car il comporte des coupleurs optiques passifs transparents à toutes les longueurs d'onde. Une paire de fibre est dédiée à l'émission et une paire de fibres est dédiée à la réception. Un commutateur situé dans un point de présence permet de transférer des données d'une fibre à une autre. Ce réseau est bien adapté pour l'établissement de circuits de communication, par contre il n'est pas bien adapté pour une transmission sporadique de données.

L'invention a pour but de remédier à cet inconvénient.

Elle propose à cet effet un réseau optique en anneau, comportant un noeud d'accès, une première fibre optique active, raccordée par l'une au moins de ses deux extrémités audit noeud d'accès, des stations couplées optiquement à ladite première fibre optique, une seconde fibre optique active, raccordée par l'une au moins de ses deux extrémités audit noeud d'accès, couplée optiquement à chaque station et dédiée à la transmission de données par chaque station ; ladite première fibre optique active étant dédiée au transfert de données vers lesdites stations ; et ledit noeud d'accès comportant des moyens de transfert agencés pour transférer vers la première fibre active certaines données acheminées par la seconde fibre active et destinées à l'une au moins des stations ;
caractérisé en ce que :
- la seconde fibre est partagée par une pluralité de stations susceptibles de transmettre des paquets de données sur une même longueur d'onde ;
- chaque station comporte des moyens de contrôle propres à déterminer si ladite station est autorisée à transmettre un paquet de données sur la seconde fibre active, sur une longueur d'onde donnée,

Grâce à l'invention, une fibre peut être partagée par une pluralité de stations émettant des données sous la forme de paquets de données. Chaque fibre est ainsi utilisée beaucoup plus efficacement, sans qu'il y ait des collisions de paquets. Toutes les données qu'une station souhaite transmettre au noeud d'accès, ou à l'une au moins des autres stations, sont injectées dans au moins une seconde fibre active (qui sert donc exclusivement à « l'écriture ») et circulent jusqu'au noeud d'accès, tandis que toutes les données destinées aux stations, qu'elles proviennent d'une station ou du noeud d'accès, sont injectées par le noeud d'accès dans l'une au moins des premières fibres actives (qui sert donc exclusivement à la « lecture »). On obtient ainsi un réseau de faible complexité, facile à déployer et de coût réduit.

Le dispositif selon l'invention pourra comporter de nombreuses caractéristiques complémentaires qui pourront être prises séparément et/ou en combinaison, et en particulier:
- au moins une autre première fibre optique active, raccordée par l'une au moins de ses deux extrémités au noeud d'accès, couplée optiquement à l'une au moins des stations et dédiée au transfert de données vers les stations, les moyens de transfert étant alors agencés pour transférer vers l'une des premières fibres actives certains paquets de données acheminés par une seconde fibre active et destinés à l'une au moins des stations ;
- au moins une première fibre optique auxiliaire associée à l'une des premières fibres optiques actives pour recevoir tout ou partie des données à transférer vers les stations soit en cas de défaillance de la première fibre active associée, soit pour permettre la répartition de la charge entre ces deux premières fibres, le noeud d'accès comportant alors des moyens de commutation capables de transférer sur la première fibre auxiliaire ou sur la première fibre active associée les données à transmettre en cas de détection de défaillance de l'une ou l'autre des premières fibres actives. On entend ici par « première fibre auxiliaire », une première fibre qui à un instant donné n'est pas utilisée du fait que la première fibre active complémentaire est déjà utilisée (on parle alors de fibre de secours), ou qui est utilisée en charge partielle tout comme la première fibre active associée. Par conséquent, il s'agit soit d'une première fibre de secours dédiée exclusivement au remplacement d'une première fibre (principale), soit d'une première fibre active sensiblement identique à une première fibre active complémentaire, la charge pouvant alors être répartie entre ces deux fibres ;
- au moins une autre seconde fibre optique active, raccordée par l'une au moins de ses deux extrémités au noeud d'accès, couplée optiquement à l'une au moins des stations et dédiée à la transmission de données par ces stations, les moyens de transfert étant alors agencés pour transférer vers une première fibre active certains paquets de données acheminés par cette autre seconde fibre active et destinés à l'une au moins des stations ;
- au moins une seconde fibre optique auxiliaire associée à l'une au moins des secondes fibres optiques actives pour recevoir tout ou partie des données à transférer vers les stations soit en cas de défaillance de la seconde fibre active associée, soit pour répartir la charge entre ces deux secondes fibres actives, le noeud d'accès comportant alors des moyens de commutation capables de transférer sur la seconde fibre auxiliaire ou sur la seconde fibre active associée les données à transmettre en cas de détection de défaillance sur l'une ou l'autre des secondes fibres. On entend ici par « seconde fibre auxiliaire », une seconde fibre qui à un instant donné n'est pas utilisée du fait que la seconde fibre active complémentaire est déjà utilisée (on parle alors de fibre de secours), ou qui est utilisée en charge partielle tout comme la seconde fibre active associée. Par conséquent, il s'agit soit d'une seconde fibre de secours dédiée exclusivement au remplacement d'une seconde fibre active (principale), soit d'une seconde fibre active sensiblement identique à une seconde fibre active complémentaire, la charge pouvant alors être répartie entre ces deux fibres ;
- des données circulant dans les premières et secondes fibres auxiliaires dans une direction opposée à celle qu'elles possèdent dans les première et seconde fibres actives associées (ou complémentaires) ;
- des premières ou secondes fibres actives ou auxiliaires transmettant une unique longueur d'onde ;
- des première(s) et seconde(s) fibres actives et/ou des première(s) et seconde(s) fibres auxiliaires transmettant des données sur une même longueur d'onde ;
- des stations comportant chacune i) un module de réception couplé optiquement à l'une au moins des premières fibres actives et auxiliaires et capable d'en extraire des données adressées à la station, et ii) un module d'émission couplé optiquement à l'une au moins des secondes fibres actives et auxiliaires et capable de transmettre des données sur une seconde fibre active ou auxiliaire en cas d'autorisation des moyens de contrôle ;
- des stations comportant une mémoire, par exemple de type partagé, couplée aux modules d'émission et de réception et pouvant stocker des données transmises et des données à transmettre ;
- des stations comportant des premiers moyens de couplage permettant de transférer, des premières fibres vers le module de réception, les données destinées à la station, et des seconds moyens de couplage assurant le couplage optique entre le module d'émission et les secondes fibres et capables, en cas d'autorisation des moyens de contrôle à transmettre sur une seconde fibre des données stockées dans la mémoire, de coupler le module d'émission à la seconde fibre ;
- des modules de réception comprenant n éléments de réception couplés à la mémoire (par exemple n=4), et des premiers moyens de couplage qui pour certains au moins comportent i) n premiers éléments passifs de combinaison couplés chacun à l'un des éléments de réception, ii) m seconds éléments passifs de séparation couplés chacun à l'une des premières fibres (m étant égal par exemple, mais pouvant également être inférieur, au nombre total de premières fibres actives et auxiliaires ; par exemple m=4), par l'intermédiaire de coupleurs optiques passifs de type 2 vers 1, et iii) n x m éléments de commutation, de type 1 vers 1 (1 :1), comme par exemple des SOA, couplés chacun à un premier élément passif et à un second élément passif ;
- des modules d'émission comprenant n' éléments d'émission comportant chacun un laser couplé à la mémoire (par exemple n'=4), et des seconds moyens de couplage qui pour certains au moins comportent i) n' premiers éléments passifs de combinaison couplés chacun à l'un desdits lasers, ii) m' seconds éléments passifs de séparation couplés chacun à l'une des secondes fibres (m' étant égal par exemple, mais pouvant également être inférieur, au nombre total de secondes fibres actives et auxiliaires ; par exemple m'=4), par l'intermédiaire de coupleurs optiques passifs de type 1 vers 2, et iii) n' x m' éléments de commutation, de type 1 vers 1 (1 :1), comme par exemple des SOA, couplés chacun à un premier élément passif et à un second élément passif. Bien entendu, un laser peut adresser plusieurs fibres et réciproquement ;
- des modules de réception comprenant, en variante, n éléments de réception couplés à ladite mémoire (par exemple n=4), et des premiers moyens de couplage qui pour certains au moins comportent n coupleurs passifs raccordés chacun à l'un des éléments de réception et à l'une au moins des premières fibres ;
- des modules d'émission comprenant, en variante, n' éléments d'émission comportant chacun un laser couplé à la mémoire (par exemple n'=4), et des seconds moyens de couplage qui pour certains au moins comportent n' coupleurs passifs raccordés chacun à l'un des éléments de réception et à l'une au moins des premières fibres, éventuellement par l'intermédiaire de n' éléments de commutation, de type « 1 :1 », comme par exemple des SOA ;
- des modules de contrôle comportant m' photodiodes couplées chacune à l'une des secondes fibres (m' étant égal par exemple, mais pouvant également être inférieur, au nombre total de secondes fibres actives et de secours ; par exemple m'=4), et agencées pour délivrer chacune un signal représentatif du taux d'occupation de la seconde fibre associée.

Le réseau selon l'invention est tout particulièrement adapté, bien que de façon non exclusive, à la transmission de paquets de données dans le domaine des télécommunications.

D'autres caractéristiques et avantages de l'invention apparaîtront à l'examen de la description détaillée ci-après, et des dessins annexés, sur lesquels :
- la figure 1 illustre de façon schématique un réseau optique en anneau selon l'invention,
- la figure 2 illustre de façon schématique une station selon l'invention équipée d'un premier mode de réalisation de moyens de couplage,
- la figure 3 illustre de façon schématique une station selon l'invention équipée d'un second mode de réalisation de moyens de couplage.

Les dessins annexés sont, pour l'essentiel, de caractère certain. En conséquence, ils pourront non seulement servir à compléter l'invention, mais aussi contribuer à sa définition, le cas échéant.

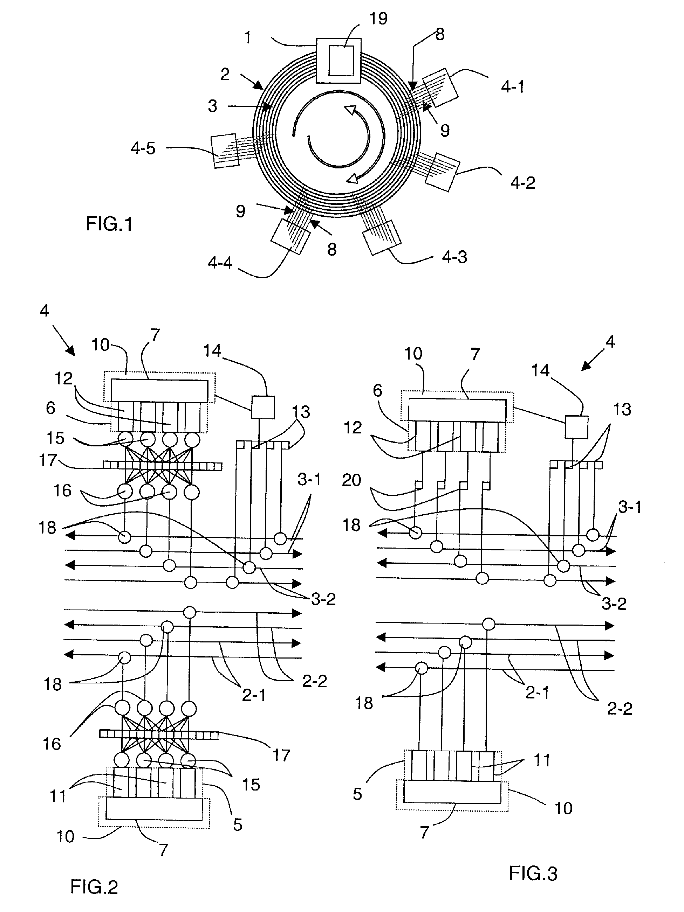

Sur la figure 1 se trouve illustré un réseau optique en anneau comprenant un noeud d'accès ou point de présence 1, auquel sont raccordées l'une au moins des deux extrémités de fibres optiques 2, 3 destinées à la transmission de données par voie optique, et plusieurs stations d'utilisateurs 4-i (ici, i = 1 à 5 ; ce nombre n'est en aucune façon limité à cinq, il s'agit d'un nombre entier positif supérieur à un (1)), couplées optiquement aux fibres 2, 3, via des moyens de couplage 8, 9 qui seront décrits plus loin en référence aux figures 2 et 3.

L'anneau est généralement raccordé à un autre réseau, dit « fédérateur » (ou « backbone »), via le noeud d'accès 1. Ce noeud d'accès, qui est de préférence de type électronique, comporte des moyens de mémorisation, tels que des mémoires électroniques, destinés à mémoriser le trafic, au moins de façon temporaire, et un commutateur électronique, de type Ethernet ou IP, équipé de moyens de conversion de type O/E/O (« Optique / Electrique / Optique ») de façon à pouvoir accéder à l'intégralité du trafic circulant dans l'anneau.

Dans l'exemple, comme cela est mieux illustré sur les figures 2 et 3, huit fibres optiques 2, 3 sont au moins partiellement raccordées au noeud d'accès 1. Plus précisément, ces huit fibres sont regroupées en deux groupes de quatre. Un premier groupe de quatre fibres 2 est dédié au transfert de données vers les stations 4-i (on parle également de lecture de données), tandis qu'un groupe de quatre fibres 3 est dédié à la transmission de données par les stations 4-i (on parle également d'écriture de données). Ces fibres sont préférentiellement agencées sous la forme de bus. On peut envisager que les deux extrémités de chaque fibre 2, 3 sont raccordées au noeud d'accès 1. Mais, on peut également envisager, d'une part, qu'une première extrémité des fibres de lecture 2 est raccordée au noeud d'accès 1, tandis qu'une seconde extrémité est raccordée à la dernière station de l'anneau, et d'autre part, qu'une première extrémité des fibres d'écriture 3 est raccordée à la dernière station de l'anneau, tandis qu'une seconde extrémité est raccordée au noeud d'accès 1.

Le premier groupe de fibres 2-q peut être subdivisé en q couples de deux fibres de lecture. Dans l'exemple, q est égal à 2 (mais q est un entier supérieur ou égal à 1). Un premier couple 2-1 comprend une fibre optique dite « active », car elle est préférentiellement utilisée, et une fibre optique dite auxiliaire. Dans l'exemple illustré, cette fibre auxiliaire est une fibre de secours, car elle n'est utilisée qu'en cas de rupture de la fibre active associée, ou de défaut de transmission de données sur celle-ci. Un second couple 2-2 comprend également une fibre optique active et une fibre optique auxiliaire. Dans l'exemple illustré, cette fibre auxiliaire est également une fibre de secours. Ce second couple 2-2 est destiné à doubler les possibilités de trafic de données de lecture de l'anneau.

Le second groupe de fibres 3-r peut être subdivisé en r couples de deux fibres d'écriture. Dans l'exemple, r est égal à 2 (mais r est un entier supérieur ou égal à 1). Un premier couple 3-1 comprend une fibre optique active et une fibre optique auxiliaire (ici de secours). Un second couple 3-2 comprend également une fibre optique active et une fibre optique auxiliaire (ici de secours). Ce second couple 3-2 est destiné à doubler les possibilités de trafic de données d'écriture de l'anneau.

Dans une première variante, chaque fibre auxiliaire est identique à la fibre active associée, de sorte que la charge puisse être répartie entre les fibres de chaque couple, par exemple à 50%-50%. Bien entendu, dans ce cas, lorsque l'une des deux fibres présente une défaillance, toute la charge est transférée sur l'autre fibre du même couple. Dans une seconde variante, on ne prévoit pas autant de fibres auxiliaires que de fibres actives. Les fibres auxiliaires sont alors destinées au dépannage (secours) ou à la répartition de charge, indifféremment pour l'une ou l'autre des fibres actives, lesquelles peuvent par ailleurs fonctionner en répartition de charge. En d'autres termes, le réseau peut comporter des fibres actives fonctionnant à pleine charge ou à charge réduite (partagée) avec d'autres fibres actives avec lesquelles elles forment des couples, ou bien avec des fibres auxiliaires avec lesquelles elles forment des couples ou qu'elles partagent avec les autres fibres actives, ainsi que des fibres auxiliaires de secours avec lesquelles elles forment des couples ou qu'elles partagent avec les autres fibres actives.

Préférentiellement, le réseau est du type dit bidirectionnel. En d'autres termes, les données circulent de préférence suivant une première direction dans la fibre active d'un couple et suivant la direction opposée dans la fibre auxiliaire (de secours) associée.

Mais, il ne s'agit là que d'un exemple de réalisation. La mise en oeuvre de l'invention ne nécessite en effet, au minimum, qu'une première fibre optique active 2, dédiée au transfert de données vers les stations 4-i, et une seconde fibre optique active 3, dédiée à la transmission de données par les stations 4-i. Le transfert de données vers les stations 4-i étant souvent beaucoup plus fréquent que la transmission de données par les stations 4-i, on peut envisager d'avoir un nombre plus important de premières fibres actives de lecture 2-q que de secondes fibres actives d'écriture 3-r. On peut également envisager d'utiliser plus de deux couples de fibres de lecture 2-q et/ou de fibres d'écriture 3-r.

Les fibres de secours ne sont pas obligatoires. Elles ne sont là que pour assurer la continuité de la transmission des paquets de données en cas de problème sur la fibre active associée. Par conséquent, dans un réseau simplifié, on peut se passer des fibres de secours en lecture et en écriture. Par ailleurs, on peut envisager qu'une seule fibre active de lecture 2 ou d'écriture 3 soit associée à une fibre de secours, les autres fibres actives n'étant pas « doublées ».

Chaque station 4-i comporte un module de réception 5, dédié à la réception, ou lecture, de données circulant dans les fibres de lecture 2-q qui lui sont destinées, et un module d'émission 6, dédié à la transmission, ou écriture, de données via les fibres d'écriture 3-r.

Les modules de réception 5 et de transmission 6 sont raccordés, d'une première part, à une mémoire 7 comprenant préférentiellement une première zone de mémorisation de données reçues et une seconde zone de données à transmettre, d'une seconde part, à des moyens 8 ou 9 de couplage aux fibres de lecture 2-q ou d'écriture 3-r, et d'une troisième part, à un module de contrôle 10. Cette mémoire 7 est de préférence une mémoire partagée.

Le module de réception 5 comporte, dans l'exemple illustré, quatre éléments de réception 11 pour réceptionner les données provenant d'une fibre de lecture 2-q. Par ailleurs, dans l'exemple illustré, le module d'émission 6 comporte quatre éléments d'émission comprenant chacun un laser 12 d'écriture de données destinées à être transmises dans les fibres d'écriture 3-r.

Préférentiellement, tous les différents éléments de réception 11 sont sensiblement identiques de manière à être interchangeables en cas de panne de l'un d'entre eux. Egalement de préférence, tous les lasers d'émission 12 délivrent un faisceau présentant une même longueur d'onde, de manière à être interchangeable, en cas de panne de l'un d'entre eux. Toujours de préférence, les longueurs d'onde de réception et d'émission sont identiques (mais il pourrait en être autrement). De la sorte, tous les lasers sont identiques (et donc équivalents sur le plan logique) et toutes les fibres optiques 2, 3 sont mono-fréquence et identiques, ce qui contribue à réduire notablement les coûts du réseau.

Au niveau des stations 4-i, la lecture des données, qui circulent dans les fibres de lecture 2, s'effectue à la volée. Par conséquent, chaque station reçoit les informations logiques, mais seulement sur une partie de la puissance, l'autre partie restant sur la fibre (active ou auxiliaire) pour assurer la communication avec les autres stations.

Le module de contrôle 10 de chaque station 4-i est destiné à gérer l'échange de données entre les fibres 2, 3 et les modules de réception 5 et d'émission 6, via leurs moyens de couplage 8, 9 respectifs. Son rôle est plus particulièrement important dans le cas de l'émission, puisque l'une de ses fonctions est d'analyser le trafic sur les fibres actives d'écriture 3-r, de manière à déterminer si la station 4-i peut transmettre des données en direction du noeud d'accès 1, sur l'une des fibres actives d'écritures 3-r, en évitant les collisions.

Afin que le module de contrôle 10 puisse assurer cette fonction, chaque station 4-i est équipée d'un dispositif d'observation. Dans l'exemple illustré sur les figures 2 et 3, ce dispositif d'observation comporte quatre photodiodes 13 couplées chacune à l'une des fibres d'écriture 3-r et délivrant à un contrôleur 14 une information électrique représentative du trafic au sein de la fibre d'écriture 3-r observée. Par exemple, les photodiodes 13 balayent les fibres d'écriture 3-r, qui leurs sont associées, selon une technique telle que « l'accès multiple par détection optique de porteuse » (plus connue sous le nom anglais « Optical CSMA » (pour Optical Carrier Sense Multiple Access)). Le contrôleur 14 délivre au module de contrôle 10 des informations lui indiquant si une transmission est possible et sur quelle fibre 3-r, de sorte qu'il puisse configurer les moyens de couplage 9 qui vont être décrits maintenant, en vue d'une éventuelle transmission de données stockées dans la seconde zone de la mémoire partagée 7.

En variante, le réseau pourrait comporter au moins une longueur d'onde additionnelle dédiée au contrôle de trafic, et associée par exemple à une procédure de délivrance de jetons, ou bien destinée à désigner la fibre à laquelle on doit se coupler.

La figure 2 illustre un premier mode de réalisation de moyens de couplage 8, 9. Ici, le module de réception 5 et le module d'émission 6 sont respectivement couplés aux fibres de lecture 2-q et 3-r par des moyens de couplage 8, 9 identiques.

Ces moyens de couplage 8, 9 comprennent, préférentiellement, d'une première part, n (ici, n=q=r=4 à titre d'exemple illustratif) premiers éléments passifs de combinaison et/ou séparation optique 15, tels que des concentrateurs n vers 1 ou des séparateurs 1 vers n, couplés chacun à un élément de réception 11 du module de réception 5 ou un laser 12 du module d'émission 6, d'une seconde part, m (ici, m=q=r=4 à titre d'exemple illustratif) seconds éléments passifs de combinaison et/ou séparation optique 16, tels que des concentrateurs m vers 1 ou des séparateurs 1 vers m, couplés chacun à une fibre de lecture 2-q ou d'écriture 3- par un coupleur optique passif 18, tel qu'un séparateur 2 vers 1 ou un concentrateur 1 vers 2, et d'une troisième part, n groupes de m éléments de commutation optique 17 (soit, ici, (n x m)=16), de préférence de type « 1 vers 1 » (1 :1), tels que des SOA, couplés chacun à l'un des n premiers éléments passifs 15 et à l'un des m seconds éléments passifs 16.

Ce mode de réalisation est particulièrement avantageux, notamment lorsque tous les lasers 12 et éléments de réception 11 sont respectivement identiques et qu'une unique longueur d'onde est utilisée pour l'émission et/ou la réception, dans la mesure où il permet de gérer sans difficulté les pannes de laser. Cette gestion est de préférence assurée par le module de contrôle de chaque station 4-i.

Bien entendu, un laser 12 ou un élément de réception 11 peut adresser plusieurs fibres et réciproquement.

La figure 3 illustre un second mode de réalisation de moyens de couplage 8, 9.

Ici, chaque laser 12 ou module de réception 5 adresse une unique fibre de lecture 2-q ou d'écriture 3-r. Par conséquent, on pourrait envisager que les moyens de couplage 8, 9 soient principalement constitués de fibres optiques de couplage (coupleur 18). Cependant, cette solution n'est envisageable que dans le cas où les lasers 12 sont à extinction rapide, comme par exemple les lasers à mode rafale (ou « burst »). Dans le cas contraire, le laser émet en permanence des données et du « bourrage », les données devant être aiguillées et le bourrage éliminé. Pour éliminer ce bourrage, on prévoit entre chaque laser 12 et chaque fibre d'écriture 3-r un commutateur optique passif 20, de type 1 vers 1, tel que par exemple une porte optique de type SOA (pour « Semiconductor Optical Amplifier »), comme illustré sur la figure 3. Il est inutile de prévoir de tels commutateurs passifs entre les modules de réception 5 et les fibres de lecture 2-q. Par conséquent, les moyens de couplage 9 comprennent ici, préférentiellement, n (ici, n=q=r=4) commutateurs optiques passifs 20, de type 1 vers 1, raccordant chacun un laser 12 du module d'émission 6, à une fibre d'écriture 3-r, par l'intermédiaire d'une fibre optique de couplage 18, tandis que les moyens de couplage 8 comprennent ici n (ici, n=q=r=4) fibres optiques de couplage 18 raccordant chacune un module de réception 5 à une fibre de lecture 2-q.

Si l'on souhaite pouvoir prendre en compte les pannes de laser, il est préférable de doubler chaque laser dans chaque élément de réception et d'émission.

Ce mode de réalisation est particulièrement simple à déployer et permet de réduire notablement le coût du réseau.

Bien entendu, on peut envisager des variantes de station dans lesquelles les modules de réception 5 et d'émission 6 ne disposent pas de moyens de couplage de même type. Ainsi, on peut envisager des stations 4-i dont les modules d'émission 6 sont couplés aux fibres d'écriture 3-r par des moyens de couplage du type de ceux décrits en référence à la figure 2, et dont les modules de réception 5 sont couplés aux fibres de lecture 2-q par des moyens de couplage du type de ceux décrits en référence à la figure 3. On peut également prévoir la situation inverse. On peut également envisager que les moyens de couplage d'émission 9 et/ou de réception 8 diffèrent d'une station à l'autre en fonction de leurs besoins respectifs.

Par ailleurs, le nombre d'éléments de réception et/ou d'émission peut varier d'une station à l'autre. Ce nombre n'est en effet pas obligatoirement égal au nombre de fibres optiques d'écriture ou de lecture. Il dépend en effet du type de moyens de couplage utilisé dans chaque station. Il est important de noter que chaque station n'a pas forcément accès à toutes les fibres de lecture et/ou d'écriture.

Afin de gérer la transmission de données entre les différentes stations 4-i et entre les stations et le noeud d'accès 1, ledit noeud d'accès 1 comporte un module de transfert 19. Selon l'agencement choisi, il reçoit soit toutes les données qui circulent dans les fibres de lecture 2-q et dans les fibres d'écriture 3-r, soit seulement toutes les données qui circulent dans les fibres d'écriture 3-r. Sa fonction principale est le transfert sur les fibres de lecture 2-q des données transmises par une station sur les fibres d'écriture 3-r et destinées à l'une au moins des autres stations du réseau. Il assure également la transmission de données entre les différentes stations 4-i et le réseau fédérateur externe, lorsque le noeud d'accès est raccordé à un tel réseau fédérateur, et inversement la transmission de données entre le réseau fédérateur externe et les différentes stations 4-i.

Le module de transfert 19, de préférence de type électronique, analyse donc en permanence les destinations finales des paquets de données qui arrivent dans le noeud d'accès, via les fibres d'écriture 3-r, et, lorsque des paquets de données concernent l'une au moins des stations, il détermine la (ou les) fibre(s) de lecture 2-q sur laquelle (lesquelles) il va transférer ces paquets de données pour qu'ils puissent être lus par la ou les stations concernées du réseau en anneau.

Le fonctionnement d'un réseau optique en anneau, selon l'invention, est particulièrement simple.

Lorsqu'une station, couplée optiquement au réseau, de façon transparente, souhaite transmettre des données au noeud d'accès et/ou à l'une au moins des autres stations du réseau, son module de contrôle 10, détermine à l'aide des informations fournies par le dispositif d'observation du trafic (13, 14) s'il est possible de transférer ces données sur l'une au moins des fibres d'écriture 3-r. Si ce n'est pas le cas, les paquets de données à transférer son mis en attente. Ils demeurent dans la seconde zone de la mémoire partagée 7 jusqu'à ce que le trafic permette de les transmettre. En revanche, lorsque les informations d'observation indiquent qu'une fibre d'écriture 3-r peut recevoir les paquets à transférer, le module de contrôle 10 sélectionne un élément d'émission 12 du module d'émission 6, configure les moyens de couplage 9 (15-17, ou 18), extrait de la mémoire partagée 7 les paquets à transférer, puis les communique à l'élément d'émission sélectionné de sorte qu'il les traite et les transmette aux moyens de couplage 9 configurés, lesquels n'ont plus qu'à les transmettre à la fibre d'écriture 3-r détectée.

Les paquets de données issus de la station circulent donc dans la fibre d'écriture détectée 3-r, parviennent au noeud d'accès 1 qui les transmet à son module de transfert 19. Ce dernier détermine si les paquets sont destinés à l'une des stations 4-i ou seulement au noeud d'accès 1. Si elles ne sont destinées qu'au noeud d'accès 1, il les communique aux moyens de gestion du noeud d'accès 1. Dans le cas contraire, il transfère les paquets de données reçus sur l'une des fibres de lecture 2-q. Les paquets circulent dans cette fibre et peuvent alors être prélevés par le module de réception 5 de chaque station destinataire, en vue d'y être traités et/ou utilisés.

Par ailleurs, lorsque les moyens de gestion du noeud d'accès 1 désirent transmettre à l'une au moins des stations 4-i des paquets de données, ils les transmettent au module de transfert 19 pour qu'il les transfère sur l'une des fibres de lecture 2-q.

Lorsque le réseau comporte des fibres de secours, de lecture 2 et/ou d'écriture 3, on prévoit des moyens de détection, par exemple de type OAM, chargés de surveiller le trafic dans ces fibres de manière à détecter tout problème de transmission et provoquer immédiatement le transfert de toutes les données sur la fibre de secours associée en cas de détection d'un problème. Il est préférable que ces moyens de détection fassent partie des moyens de transfert 19 du noeud d'accès 1.

L'invention ne se limite pas aux modes de réalisation de réseaux décrits ci-avant, seulement à titre d'exemple, mais elle englobe toutes les variantes que pourra envisager l'homme de l'art dans le cadre des revendications ci-après.

## Revendications

1. Réseau optique en anneau, comportant un noeud d'accès (1), une première fibre optique active (2-1), raccordée par l'une au moins de ses deux extrémités audit noeud d'accès, des stations (4-i) couplées optiquement à ladite première fibre optique (2-1), une seconde fibre optique active (3-1), raccordée par l'une au moins de ses deux extrémités audit noeud d'accès (1), couplée optiquement à chaque station (4-i) et dédiée à la transmission de données par chaque station; ladite première fibre optique active (1) étant dédiée au transfert de données vers lesdites stations ; et ledit noeud d'accès (1) comportant des moyens de transfert (19) agencés pour transférer vers la première fibre active (2-1) certaines données acheminées par la seconde fibre active (3-1) et destinées à l'une au moins des stations (4-i) ;
**caractérisé en ce que** :
- la seconde fibre (3-1) est partagée par une pluralité de stations susceptibles de transmettre des paquets de données sur une même longueur d'onde ;
- chaque station (4-i) comporte des moyens de contrôle (10) propres à déterminer si ladite station est autorisée à transmettre un paquet de données sur la seconde fibre active (3-1), sur une longueur d'onde donnée,

2. Réseau selon la revendication 1, **caractérisé en ce qu'**il comporte au moins une autre première fibre optique active (2-2), raccordée par l'une au moins de ses deux extrémités audit noeud d'accès (1), couplée optiquement à l'une au moins des stations (4-i) et dédiée au transfert de données vers les stations, lesdits moyens de transfert (19) étant agencés pour transférer vers l'une desdites premières fibres actives (2-1,2-2) certaines données acheminées par une seconde fibre active (3-1,3-2) et destinés à l'une au moins des stations (4-i).

3. Réseau selon la revendication 1, **caractérisé en ce que** l'une au moins des premières fibres optiques actives (2-1,2-2) est associée à au moins une première fibre optique auxiliaire (2-1,2-2) propre à recevoir tout ou partie des données à transférer vers les stations, et **en ce que** ledit noeud d'accès (1) comporte des moyens de transfert (19) propres à transférer sur ladite première fibre auxiliaire ou sur la première fibre active associée les données à transmettre en cas de détection de défaillance de l'une desdites premières fibres active et auxiliaire associées.

4. Réseau selon la revendication 1, **caractérisé en ce qu'**il comporte au moins une autre seconde fibre optique active (3-2), raccordée par l'une au moins de ses deux extrémités audit noeud d'accès (1), couplée optiquement à l'une au moins des stations (4-i) et dédiée à la transmission de données par les stations, lesdits moyens de transfert (19) étant agencés pour transférer vers une première fibre active (2-1,2-2) certaines données acheminées par cette autre seconde fibre active (3-2) et destinés à l'une au moins des stations.

5. Réseau selon la revendication 3, **caractérisé en ce que** l'une au moins desdites secondes fibres optiques actives (3-1,3-2) est associée à au moins une seconde fibre optique auxiliaire propre à recevoir tout ou partie des données transmises par les stations, et **en ce que** ledit noeud d'accès (1) comporte des moyens de transfert (19) propres à transférer les données à transmettre sur la seconde fibre auxiliaire ou sur la seconde fibre active associée en cas de détection de défaillance de l'une desdites secondes fibres active et auxiliaire.

6. Réseau selon la revendication 3, **caractérisé en ce que** dans les première et seconde fibres auxiliaires les données circulent dans une direction opposée à la direction de circulation dans les première et seconde fibres actives associées.

7. Réseau selon la revendication 1, **caractérisé en ce que** chaque première (2-1,2-2) ou seconde (3-1,3-2) fibre active ou auxiliaire est agencée pour transmettre une unique longueur d'onde.

8. Réseau selon la revendication 5, **caractérisé en ce que** les première(s) (2-1,2-2) et seconde(s) (3-1,3-2) fibres actives et/ou les première(s) (2-1,2-2) et seconde(s) (3-1,3-2) fibres auxiliaires transmettent des données sur une même longueur d'onde.

9. Réseau selon la revendication 3, **caractérisé en ce que** chaque station (4-i) comporte i) un module de réception (5) couplé optiquement à l'une au moins des premières fibres actives et auxiliaires (2-1,2-2) et agencé pour en extraire des données adressées à la station, et ii) un module d'émission (6) couplé optiquement à l'une au moins des secondes fibres actives et auxiliaires (3-1,3-2) et agencé pour transmettre des données sur une seconde fibre active ou auxiliaire en cas d'autorisation desdits moyens de contrôle (10).

10. Réseau selon la revendication 9, **caractérisé en ce que** chaque station (4-i) comporte une mémoire (7) couplée auxdits modules d'émission (6) et de réception (5) et propre à stocker des données transmises et des données à transmettre.

11. Réseau selon la revendication 10, **caractérisé en ce que** chaque station (4-i) comporte des premiers moyens de couplage (8) propres à transférer, des premières fibres (2) vers le module de réception (5), les données destinées à la station, et des seconds moyens de couplage (9) assurant le couplage optique entre le module d'émission (6) et lesdites secondes fibres (3), et propres, en cas d'autorisation desdits moyens de contrôle (10) à transmettre sur une seconde fibre (3) des données stockées dans la mémoire (7), à coupler ledit module d'émission (6) à ladite seconde fibre (3).

12. Réseau selon la revendication 11, **caractérisé en ce que** chaque module de réception (5) comprend n éléments de réception (11) couplés chacun à ladite mémoire (7), et **en ce que** certains au moins desdits premiers moyens de couplage (8) comportent i) n premiers éléments passifs de combinaison (15) couplés chacun à l'un desdits éléments de réception (11), ii) m seconds éléments passifs de séparation (16) couplés chacun à l'une desdites premières fibres (2), m étant inférieur ou égal au nombre total de secondes fibres actives et auxiliaires (2), et iii) n x m éléments de commutation (17) couplés chacun à un premier élément passif (15) et un second élément passif (16).

13. Réseau selon la revendication 12, **caractérisé en ce que** chaque second élément passif de séparation (16) est couplé à une première fibre active ou une première fibre auxiliaire par l'intermédiaire d'un coupleur optique passif (18) de type 2 vers 1.

14. Réseau selon la revendication 11, **caractérisé en ce que** chaque module d'émission (6) comprend n' éléments d'émission comportant chacun un laser (12) couplé à ladite mémoire (7), et **en ce que** certains au moins desdits seconds moyens de couplage (9) comportent i) n' premiers éléments passifs de combinaison (15) couplés chacun à l'un desdits lasers (12), ii) m' seconds éléments passifs de séparation (16) couplés chacun à l'une desdites secondes fibres (3), m' étant inférieur ou égal au nombre total de secondes fibres actives et auxiliaires (3), et iii) n' x m' éléments de commutation (17) couplés chacun à un premier élément passif (15) et un second élément passif (16).

15. Réseau selon la revendication 14, **caractérisé en ce que** chaque second élément passif de séparation (16) est couplé à une seconde fibre active ou une seconde fibre auxiliaire par l'intermédiaire d'un coupleur optique passif (18) de type 1 vers 2.

16. Réseau selon la revendication 11, **caractérisé en ce que** chaque module de réception (5) comprend n éléments de réception (11) couplés chacun à ladite mémoire (7), et **en ce que** certains au moins desdits premiers moyens de couplage (8) comportent n coupleurs optiques passifs (18) de type 2 vers 1 couplés chacun à l'un desdits éléments de réception (11) et à l'une desdites premières fibres active et auxiliaire (2).

17. Réseau selon la revendication 11, **caractérisé en ce que** chaque module d'émission (6) comprend n éléments d'émission comportant chacun un laser (12) couplé à ladite mémoire (7), et **en ce que** certains au moins desdits seconds moyens de couplage (9) comportent n coupleurs optiques passifs (18) de type 1 vers 2 couplés chacun à l'un desdits laser (12) et à l'une desdites secondes fibres active et auxiliaire (3).

18. Réseau selon la revendication 17, **caractérisé en ce que** chaque coupleur optique passif (18) est couplé à un laser (12) par l'intermédiaire d'un élément de commutation (20) de type « 1 :1 ».

19. Réseau selon la revendication 1, **caractérisé en ce que** chaque module de contrôle (10) comporte m' photodiodes (13) couplées chacune à l'une desdites secondes fibres (3), m' étant égal au nombre total de secondes fibres actives et auxiliaires, et agencées pour délivrer chacune un signal représentatif du taux d'occupation de la seconde fibre associée.
